# EUROPÄISCHE PATENTSCHRIFT

(11) **EP 0 619 878 B1**
(45) Veröffentlichungstag und Bekanntmachung des Hinweises auf die Patenterteilung: **21.05.1997**
(21) Anmeldenummer: 93922887.0
(22) Anmeldetag: 21.10.1993
(51) Int. Cl.: G01K 13/02

(54) **TEMPERATURFÜHLER**
TEMPERATURE SENSOR
SONDE DE TEMPERATURE

(30) Priorität: 04.11.1992 DE 4237224
(43) Veröffentlichungstag der Anmeldung: 19.10.1994
(73) Patentinhaber: ROBERT BOSCH GMBH, 70442 Stuttgart (DE)
(72) Erfinder: REICHL, Asta, D-70499 Stuttgart (DE); JENNER, Martin, D-71638 Ludwigsburg (DE); WITZIG, Armin, D-71272 Renningen (DE); ROSE, Anita, D-71282 Hemmingen (DE); KUENZL, Bernd, D-71701 Schwieberdingen (DE)
(86) Internationale Anmeldenummer: DE9301002
(87) Internationale Veröffentlichungsnummer: WO9410547

(56) Entgegenhaltungen:
- DE-A- 2 921 787
- DE-A- 3 843 233
- DE-U- 900 677
- DE-U- 8 804 012
- DE-U- 8 903 625
- US-A- 4 968 152

## Beschreibung

### Stand der Technik

Die Erfindung geht aus von einem Temperaturfühler nach der Gattung des Hauptanspruchs. Es ist schon ein Temperaturfühler bekannt (DE 30 44 40 419 C2), bei dem ein temperaturabhängiges, elektrisches Widerstandselement mit zwei Anschlußdrähten berührungslos von einer Durchbrüche aufweisenden Schutzhülse umgeben ist. Bei einem derartigen Temperaturfühler kann es bei einer einbauortabhängigen mechanischen Schwingungsanregung zu Drahtbruch in den Anschlußdrähten kommen, was zu einem Ausfall des Temperaturfühlers führt. Darüber hinaus vermindert die Schutzhülse den freien Zutritt des zu messenden Strömungsmediums zum Widerstandselement, was die Ansprechzeit auf Temperaturänderungen erhöht. Ein weiterer Temperaturfühler ist aus DE-U-89 03 625 bekannt.

Da die Temperatur der Ansaugluft beispielsweise Eingangsgröße für eine elektronisch gesteuerte Brennstoffeinspritzanlage sein kann und fehlerbehaftete Eingangsgrößen die Bildung des Brennstoff-Luft-Gemisches in unerwünschter Weise beeinflussen, ist für den Betrieb einer Brennkraftmaschine eine möglichst störungsfreie und verzögerungsfreie Temperaturerfassung erforderlich.

### Vorteile der Erfindung

Der erfindungsgemäße Temperaturfühler mit den kennzeichnenden Merkmalen des Hauptanspruchs hat demgegenüber den Vorteil, daß in Strömungsrichtung ein freier Zutritt des zu messenden Strömungsmediums auf das elektrische Widerstandselement gewährleistet ist, wodurch eine störungs- und verzögerungsfreie Temperaturerfassung erfolgt, wobei zugleich eine Stabilisierung der Anschlußdrähte und des Widerstandselement sichergestellt wird.

Durch die in den Unteransprüchen aufgeführten Maßnahmen sind vorteilhafte Weiterbildungen und Verbesserungen des im Hauptanspruch angegebenen Temperaturfühlers möglich.

Besonders vorteilhaft ist die Anordnung der Anschlußleitungen im Trägerkörper, wodurch ein großer Schutz vor Beschädigungen erreicht wird.

Die Ausbildung eines Steckerelements am Trägerkörper ermöglicht einen einfachen und störungsfreien Anschluß von Anschlußleitungen zur Signalübertragung.

Die Anordnung des Trägerkörpers in einer Durchgangsöffnung der Strömungsleitung gewährleistet eine vorteilhafte Montage des Temperaturfühlers.

### Zeichnung

Ausführungsbeispiele der Erfindung sind in der Zeichnung vereinfacht dargestellt und in der nachfolgenden Beschreibung näher erläutert.

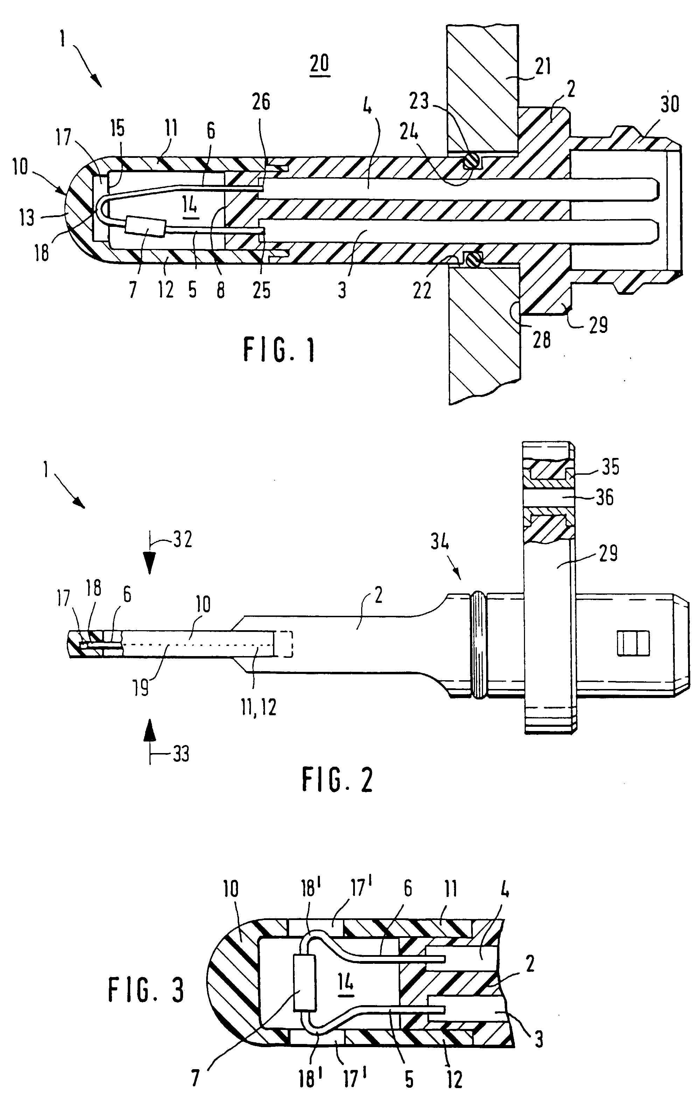

Es zeigen Figur 1 einen Längsschnitt durch ein erstes Ausführungsbeispiel eines erfindungsgemäß ausgestalteten Temperaturfühler, Figur 2 eine Seitenansicht eines Temperaturfühlers nach dem Ausführungsbeispiel nach Figur 1 und Figur 3 einen Teilschnitt durch ein Strömungsfenster eines zweiten Ausführungsbeispieles eines Temperaturfühlers.

### Beschreibung des Ausführungsbeispieles

In Figur 1 ist mit 1 ein Temperaturfühler bezeichnet, der beispielsweise zur Temperaturmessung von Ansaugluft in einem Ansaugrohr einer gemischverdichtenden, fremdgezündeten Brennkraftmaschine dient. Der Temperaturfühler 1 hat einen vorzugsweise aus Kunststoff bestehenden Trägerkörper 2, in dem Steckerfahnen 3, 4 beispielsweise durch Umspritzung festgelegt sind. Die Steckerfahnen 3, 4 sind an Verbindungsstellen 25, 26 elektrisch leitend mit Anschlußdrähten 5, 6 eines temperaturabhängigen elektrischen Widerstandselements 7 verbunden, das vorteilhafterweise einen negativen Temperaturkoeffizienten (NTC-Widerstand) aufweist.

Der auf der einen Seite des Widerstandselementes 7 liegende Anschlußdraht 6 hat etwa die doppelte Länge des auf der anderen Seite des Widerstandselementes 7 angreifenden Anschlußdrahtes 5 und weist eine gebogene, etwa halbkreisförmige Biegestelle 18 auf, die nahe dem Widerstandselement 7 liegt, wodurch die Anschlußdrähte 5, 6 einen etwa U-förmigen Verlauf annehmen. An einer dem Widerstandselement 7 zugewandten Stirnseite 8 des Trägerkörpers 2 ist ein Schutzbügel 10 ausgebildet, der das Widerstandselement 7 und die Anschlußdrähte 5, 6 seitlich umgibt. Der Schutzbügel 10 hat zwei Schenkel 11, 12 und eine Grundseite 13, die zusammen mit der Stirnseite 8 ein etwa rechteckförmiges Strömungsfenster 14 bilden. Die Anschlußdrähte 5, 6 liegen dabei etwa parallel zu den Schenkeln 11, 12.

An einer der Stirnseite 8 gegenüberliegenden Innenfläche 15 der Grundseite 13 ist zum Strömungsfenster 14 hin eine Aufnahmeöffnung 17 ausgebildet, in die die Biegestelle 18 des Anschlußdrahtes 5 hineinragt. Die Aufnahmeöffnung 17 kann dabei eine beliebige Form annehmen, beispielsweise kann sie die Wandung des Strömungsfensters 14 teilweise (wie in Figur 1 gezeigt) oder auch vollständig durchdringen. Das Strömungsfenster 14 ragt in das Innere einer Strömungsleitung 20 und ist senkrecht zur Strömungsrichtung derart angeordnet, daß die Grundseite 13 quer zur Strömungsrichtung liegt, wodurch der freie Zugang des Strömungsmediums zum Widerstandselement 7 gewährleistet ist. Die Verbindungsstellen 25, 26 können, wie in Figur 1 gezeigt, vom Trägerkörper 2 umschlossen sein, oder auch in das Strömungsfenster 14 hineinragen.

Die Strömungsleitung 20 hat eine Wandung 21 mit einer Durchgangsbohrung 22, die vom Trägerkörper 2 und den darin angeordneten Steckerfahnen 3, 4 durchragt wird. Ein Dichtring 23 sitzt in einer Ringnut 24, die am Trägerkörper 2 angeordnet ist, und verhindert, daß das in der Strömungsleitung 20 strömende Medium durch die Durchgangsbohrung 22 nach außerhalb der Strömungsleitung 20 gelangt. Durch die Ausbildung eines Absatzes 28, beispielsweise eines Befestigungsflansches 29, am Trägerkörper 2 kann in einfacher Weise die Eindringtiefe des Strömungsfensters 14 in die Strömungsleitung 20 festgelegt werden. Am außerhalb der Strömungsleitung liegenden Ende der Steckerfahnen 3, 4 befindet sich ein vom Trägerkörper 2 gebildetes Steckerelement 30, das einen vorteilhaften Anschluß des Temperaturfühlers an ein externes, elektronisches Auswertegerät ermöglicht.

Figur 2 zeigt eine Seitenansicht des erfindungsgemäß ausgebildeten Temperaturfühlers 1, der vom zu messenden Strömungsmedium in Pfeilrichtung 32 oder 33 angeströmt wird. Der Trägerkörper 2 hat in einem die Wandung 21 der Strömungsleitung 20 (Figur 1) durchragenden Bereich 34 einen runden Querschnitt, der sich zum in der Strömung liegenden Ende des Trägerkörpers 2 hin verjüngt und dabei rechteckförmig wird.

In Figur 2 ist angedeutet, daß der Schutzbügel 10 sowohl vom Trägerkörper 2 gebildet, als auch als separates Teil ausgebildet werden kann und beispielsweise durch Umspritzung der freien Enden der Schenkel 11, 12 am Trägerkörper 2 festlegbar ist (gestrichelte Linien).

Der Teilschnitt am Schutzbügel 10 zeigt die Aufnahmeöffnung 17, in der die Biegestelle 18 des Anschlußdrahtes 6 festgelegt ist. Dies kann dadurch geschehen, daß die Biegestelle 18 in die Aufnahmeöffnung 17 eines einteiligen Schutzbügels 10 im Falle einer in Strömungsrichtung 32, 33 engen Aufnahmeöffnung 17 eingepreßt oder im Falle einer weiten Aufnahmeöffnung 17 nachträglich verklebt wird, beispielsweise durch einen abschließend aufgetragenen Isolierlack. Ist der Schutzbügel 10 separat ausgebildet, so kann er darüber hinaus entlang seiner Längsachse 19 geteilt sein (gepunktete Linie), so daß die Biegestelle 18 des Anschlußdrahtes 5 beim Zusammenfügen beider Hälften teilweise umschlossen wird.

Der Flansch 29 ist in Pfeilrichtung 33 verlängert und umschließt durch Umspritzung einen Hülsenkörper 35 aus Metall, der eine Durchgangsbohrung 36 hat, durch die beispielsweise der Trägerkörper 2 an der Wandung 21 der Strömungsleitung 20 (Figur 1) mittels einer Schraubverbindung befestigbar ist.

Figur 3 zeigt ein zweites Ausführungsbeispiel des erfindungsgemäßen Temperaturfühlers unter Verwendung gleicher Bezugszeichen wie in den Figuren 1 und 2 für gleiche und gleichwirkende Teile. Gezeigt ist das vom Schutzbügel 10 gebildete Strömungsfenster 14, in dem das Widerstandselement 7 angeordnet ist. Die Anschlußleitungen 5, 6 sind dabei etwa gleichlang ausgebildet und haben jeweils eine Biegestelle 18' nahe dem Widerstandselement 7. An den Schenkeln 11, 12 des Schutzbügels 10 ist jeweils eine Aufnahmeöffnung 17' ausgebildet, in der die Biegestellen 18' nach einer der zuvor genannten Möglichkeiten festgelegt sind. Die Kontaktierung der Anschlußdrähte 5, 6 erfolgt entsprechend Figur 1 über die im Trägerkörper 2 angeordneten Steckerfahnen 3, 4.

## Patentansprüche

1. Temperaturfühler zur Messung der Temperatur eines in einer Strömungsleitung von Brennkraftmaschinen strömenden Mediums, mit einem zwei starre Anschlußdrähte aufweisenden, temperaturabhängigen elektrischen Widerstandselement und einem die Anschlußdrähte aufnehmenden Trägerkörper, dadurch gekennzeichnet, daß mit dem Trägerkörper (2) ein Schutzbügel (10) verbunden ist, der ein Strömungsfenster (14) umschließt und das Widerstandselement (7) in dem in die Strömungsleitung (20) ragenden Strömungsfenster (14) angeordnet ist und wenigstens einer der Anschlußdrähte (5, 6) eine gebogene Biegestelle (18, 18') aufweist, die in wenigstens eine in wenigstens einer der Wandungen des Schutzbügels (10) ausgebildeten Aufnahmeöffnung (17, 17') hineinragt.

2. Temperaturfühler nach Anspruch 1, dadurch gekennzeichnet, daß der Schutzbügel (10) zwei Schenkel (11, 12) und eine dem Trägerkörper abgewandte Grundseite (13) hat.

3. Temperaturfühler nach Anspruch 2, dadurch gekennzeichnet, daß der Schutzbügel (10) durch Umspritzung der Schenkel (11, 12) fest mit dem Trägerkörper (2) verbunden ist.

4. Temperaturfühler nach Anspruch 1, dadurch gekennzeichnet, daß die wenigstens eine Biegestelle (18) in der Aufnahmeöffnung (17, 17') verklebt ist.

5. Temperaturfühler nach Anspruch 1, dadurch gekennzeichnet, daß der Schutzbügel (10) Teil des Trägerkörpers (2) ist und die wenigstens eine Aufnahmeöffnung (17, 17') für die wenigstens eine Biegestelle (18, 18') in wenigstens einer der Wandungen des Schutzbügels (10) ausgebildet ist.

6. Temperaturfühler nach einem der vorhergehenden Ansprüche, dadurch gekennzeichnet, daß die Anschlußdrähte (5, 6) elektrisch leitend mit Steckerfahnen (3, 4) verbunden sind, die parallel zueinander angeordnet entlang der Längsachse des Trägerkörpers (2) wenigstens teilweise im Inneren des Trägerkörpers (2) verlaufen, wobei der Trägerkörper (2) die Steckerfahnen (3, 4) isolierend umschließt.

7. Temperaturfühler nach Anspruch 6, dadurch gekennzeichnet, daß an dem den Anschlußdrähten (5, 6 ) abgewandten Ende der Steckerfahnen (3, 4) ein einteiliges Steckerelement (30) ausgebildet ist.

8. Temperaturfühler nach einem der vorhergehenden Ansprüche, dadurch gekennzeichnet, daß der Trägerkörper (2) eine in der Wandung der Strömungsleitung (20) ausgebildete Durchgangsbohrung (22) durchragt und wenigstens der in der Durchgangsbohrung (22) liegende Bereich (34) des Trägerkörpers (2) eine zylindrische Außenfläche mit einer Ringnut (24) hat, in der ein das Innere der Strömungsleitung (20) gegenüber der Umgebung der Strömungsleitung (20) abdichtender Dichtring (23) angeordnet ist.

9. Temperaturfühler nach Anspruch 8, dadurch gekennzeichnet, daß am Trägerkörper (2) zwischen Steckerelement (30) und zylindrischer Außenfläche ein Befestigungsflansch (29) ausgebildet ist, durch den die Eindringtiefe des Trägerkörpers (2) in die Strömungsleitung (20) bestimmbar ist, und der Trägerkörper (2) im Befestigungsflansch (29) einen Hülsenkörper (35) mit einer Durchgangsöffnung (36) umschließt, durch die der Trägerkörper (2) beispielsweise über eine Schraubverbindung an der Wandung der Strömungsleitung (20) fixierbar ist.

10. Temperaturfühler nach einem der vorhergehenden Ansprüche, dadurch gekennzeichnet, daß die in das strömende Medium ragenden Bereiche der Anschlußdrähte (5, 6), der Steckerfahnen (3, 4) und des Widerstandselementes (7) mit einem gegenüber chemischen und abrasiven Einflüssen widerstandsfähigen Schutzlack versehen sind.

## Claims

1. Temperature probe for measuring the temperature of a medium flowing in a flow line of internal combustion engines, having a temperature-dependent, electrical resistance element exhibiting two rigid connecting wires and a carrier body holding the connecting wires, characterized in that a protective bracket (10), which encloses a flow window (14), is connected to the carrier body (2) and the resistance element (7) is disposed in the flow window (14) projecting into the flow line (20), and at least one of the connecting wires (5, 6) exhibits a curved bend point (18, 18'), which projects into at least one retaining opening (17, 17') formed in at least one of the walls of the protective bracket (10).

2. Temperature probe according to Claim 1, characterized in that the protective bracket (10) has two limbs (11, 12) and a base side (13) remote from the carrier body.

3. Temperature probe according to Claim 2, characterized in that the protective bracket (10) is firmly connected to the carrier body (2) by extrusion coating of the limbs (11, 12).

4. Temperature probe according to Claim 1, characterized in that the at least one bend point (18) is bonded in the retaining opening (17, 17').

5. Temperature probe according to Claim 1, characterized in that the protective bracket (10) is part of the carrier body (2) and the at least one retaining opening (17, 17') for the at least one bend point (18, 18') is formed in at least one of the walls of the protective bracket (10).

6. Temperature probe according to one of the preceding claims, characterized in that the connecting wires (5, 6) are electrically conductively connected to plug lugs (3, 4), which, being disposed parallel to one another, extend along the longitudinal axis of the carrier body (2) at least partially in the interior of the carrier body (2), the carrier body (2) enclosing the plug lugs (3, 4) in an insulating fashion.

7. Temperature probe according to Claim 6, characterized in that an integral plug element (30) is formed at that end of the plug lugs (3, 4) which is remote from the connecting wires (5, 6).

8. Temperature probe according to one of the preceding claims, characterized in that the carrier body (2) penetrates a through-bore (22) formed in the wall of the flow line (20) and at least that region (34) of the carrier body (2) which is situated in the through-bore (22) has a cylindrical external surface with an annular groove (24), in which a sealing ring (23) sealing the interior of the flow line (20) with respect to the surroundings of the flow line (20) is disposed.

9. Temperature probe according to Claim 8, characterized in that, on the carrier body (2) between plug element (30) and the cylindrical external surface, there is formed a securing flange (29), by which the depth of penetration of the carrier body (2) into the flow line (20) is determinable, and the carrier body (2) encloses in the securing flange (29) a casing body (35) with a through-opening (36), through which the carrier body (2) can be fixed to the wall of the flow line (20), for example by means of a screw connection.

10. Temperature probe according to one of the preceding claims, characterized in that those regions of the connecting wires (5, 6) of the plug lugs (3, 4) and of the resistance element (7) which project into the flowing medium are provided with a protective varnish which is resistant to chemical and abrasive influences.

## Revendications

1. Sonde de température pour mesurer la température d'un fluide passant dans une conduite d'un moteur à combustion interne, comprenant un élément résistant électrique dépendant de la température ayant deux fils de branchement rigides et un support recevant les fils de branchement,
caractérisée en ce qu'
un étrier protecteur (10) est relié au support (2), cet étrier entourant une fenêtre de passage (14) et l'élément résistant (7) est placé dans la fenêtre de passage (14) venant dans la conduite (20) et au moins l'un des fils de branchement (5, 6) comporte une partie cintrée (18, 18') qui pénètre dans au moins un logement (17, 17') réalisé dans l'une des parois de l'étrier (10).

2. Sonde de température selon la revendication 1,
caractérisée en ce que
l'étrier de protection (10) possède deux branches (11, 12) et un côté de base (13) opposé au support.

3. Sonde de température selon la revendication 2,
caractérisée en ce que
l'étrier de protection (10) est relié solidairement au support (2) par enrobage des branches (11, 12) par injection.

4. Sonde de température selon la revendication 1,
caractérisée en ce qu'
au moins une zone de cintrage (18) est collée dans le logement (17, 17').

5. Sonde de température selon la revendication 1,
caractérisée en ce que
l'étrier de protection (10) fait partie du support (2) et comporte au moins un logement (17, 17') pour au moins une partie cintrée (18, 18') dans au moins l'une des parois de l'étrier de protection (10).

6. Sonde de température selon l'une quelconque des revendications 1 à 5,
caractérisée en ce que
les fils de branchement (5, 6) sont reliés électriquement aux fiches de connexion (3, 4) qui sont parallèles le long de l'axe longitudinal du support (2) en passant au moins en partie à l'intérieur du support (2), ce support (2) entourant de manière isolée les fiches de connexion (3, 4).

7. Sonde de température selon la revendication 6,
caractérisée en ce que
l'extrémité des fiches de connexion (3, 4) opposée aux fils de branchement (5, 6) forme un élément de connecteur (30) en une seule partie.

8. Sonde de température selon l'une quelconque des revendications 1 à 7,
caractérisée en ce que
le support (2) traverse un perçage (22) réalisé dans la paroi de la conduite (20) et au moins la zone (34) du support (2) qui se trouve dans le passage (22) possède une surface extérieure cylindrique munie d'une rainure annulaire (24) recevant une bague d'étanchéité (23) assurant l'étanchéité de l'intérieur de la conduite (20) par rapport à l'environnement de la conduite (20).

9. Sonde de température selon la revendication 8,
caractérisée en ce qu'
une bride de fixation (29) est réalisée sur le support (2) entre l'élément de connecteur (30) et la surface extérieure cylindrique, cette bride définissant la profondeur de pénétration du support (2) dans la conduite (20) et le support (2) comporte dans la bride de fixation (29), une douille (35) avec un orifice traversant (36) qui permet de bloquer le support (2) par exemple par une liaison à vis à la paroi de la conduite (20).

10. Sonde de température selon l'une quelconque des revendications 1 à 9,
caractérisée en ce que
les zones des fils de branchement (5, 6) pénétrant dans le fluide qui s'écoule, les fiches de connexion (3, 4) et l'élément résistant (7) sont munis d'un vernis protecteur résistant aux influences chimiques et abrasives.
